# FASCICULE DE BREVET EUROPEEN

(11) **EP 1 077 853 B1**
(45) Date de publication et mention de la délivrance du brevet: **07.08.2002**
(21) Numéro de dépôt: 99918041.7
(22) Date de dépôt: 10.05.1999
(51) Int. Cl.: B60T 13/573

(54) **MAITRE-CYLINDRE A REACTION HYDRAULIQUE INDEPENDANTE DE LA VISCOSITE**
HAUPTBREMSZYLINDER MIT VON DER VISKOSITÄT UNABHÄNGIGER HYDRAULISCHER REAKTION
MASTER-CYLINDER WITH HYDRAULIC REACTION INDEPENDENT OF VISCOSITY

(30) Priorité: 14.05.1998 FR 9806064
(43) Date de publication de la demande: 28.02.2001
(73) Titulaire: BOSCH SISTEMAS DE FRENADO, S.L., 08080 Barcelona 6 (ES)
(72) Inventeur: Simon Bacardit, Juan, Bosch Systèmes de Freinage, F-93700 Drancy (FR); Sacristan, Fernando, Bosch Systèmes de Freinage, F-93700 Drancy (FR)
(74) Mandataire: Hurwic, Aleksander Wiktor
(86) Numéro de dépôt international: FR9901109
(87) Numéro de publication internationale: WO9958383

(56) Documents cités:
- WO-A-94/07721
- WO-A-96/29221
- WO-A-98/06613

## Description

La présente invention concerne un maître-cylindre à réaction hydraulique, comprenant une chambre de travail qui est remplie d'un fluide de freinage et dans laquelle coulisse, suivant un premier axe, un piston principal percé d'un alésage axial fermé par un piston de réaction, le piston de réaction étant également mobile suivant le premier axe et délimitant dans l'alésage une chambre de réaction qui communique avec la chambre de travail à travers un clapet anti-retour et à travers au moins une restriction destinés ensemble à opposer à une circulation de fluide depuis la chambre de travail vers la chambre de réaction, et à une circulation en sens inverse, des première et seconde pertes de charge respectives dont la première est supérieure à la seconde.

Un maître-cylindre de ce type est intégré au dispositif de freinage décrit dans l'art antérieur par le brevet EP - 0 662 894.

Un tel dispositif de freinage présente l'avantage d'optimiser l'intensité de la force de freinage en cas de coup de frein brusque, notamment en retardant la montée de la force de réaction qui s'oppose à cette force de freinage.

Une difficulté est cependant apparue au cours de la mise au point de ce dispositif dans le domaine des basses températures, la viscosité du fluide de freinage étant alors trop élevée pour permettre l'apparition d'une force de réaction.

La présente invention se situe dans ce contexte et a pour but de proposer un maître-cylindre à réaction hydraulique, dont le fonctionnement ne soit pas perturbé par les variations de la viscosité du fluide de freinage, au moins dans la gamme de températures que doit couvrir un dispositif de freinage.

A cette fin, le maître-cylindre de la présente invention, par ailleurs conforme à la définition générique qu'en donne le préambule ci-dessus, est caractérisé en ce que le clapet anti-retour et la restriction sont montés mobiles par rapport au piston principal.

Par exemple, le clapet anti-retour et la restriction sont portés par un troisième piston coulissant de façon étanche dans l'alésage entre deux butées de cet alésage.

Dans ce cas, un ressort contraint en compression est de préférence disposé dans la chambre de réaction entre le piston de réaction et le troisième piston.

Selon un mode de réalisation possible de l'invention, dans lequel le clapet anti-retour comprend un organe d'obturation élastiquement sollicité contre un siège, la restriction est simplement constituée par une fuite entre l'organe d'obturation et le siège.

D'autres caractéristiques et avantages de l'invention ressortiront clairement de la description qui en est faite ci-après et nullement limitatif, en référence aux dessins ci-joints dans lesquels :
- la Figure 1 est une vue en coupe du dispositif de freinage connu décrit dans le brevet EP - 0 662 894 précité; et
- la Figure 2 est une vue en coupe des organes spécifiques du maître-cylindre de l'invention.

Le brevet antérieur EP- 0 662 894 décrit un système de freinage, qui comprend schématiquement un servomoteur pneumatique d'assistance 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet 7, commandé par une tige de commande 8, laquelle est reliée à une pédale de frein (non représentée).

Lorsque la tige de commande 8 est en position de repos, en l'occurrence tirée vers la droite, le clapet 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres alors ressentie par la membrane 4a exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

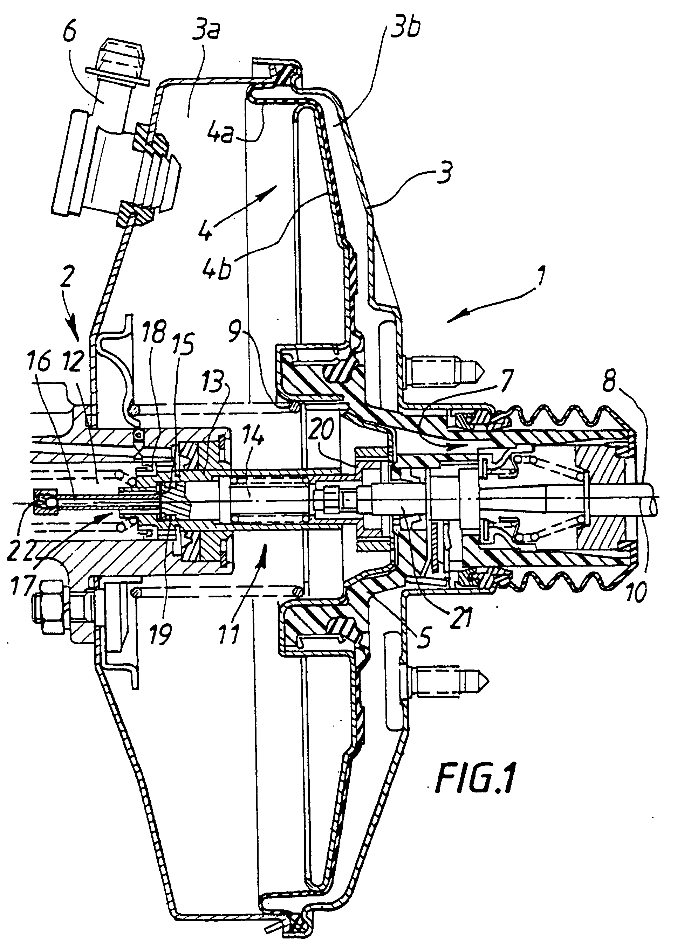

Plus précisément, la force d'actionnement est appliquée sur l'ensemble piston 11 du maître-cylindre et en provoque le déplacement vers la gauche (sur la figure 1) suivant l'axe 10, ce qui entraîne une élévation de pression du liquide de freinage présent dans la chambre de travail 12 du maître-cylindre, et un actionnement du frein relié à cette dernière.

L'ensemble piston 11 est en fait composite et comprend un piston principal 13 percé d'un alésage axial 130 fermé de façon étanche par un piston de réaction 14 et un joint annulaire 19.

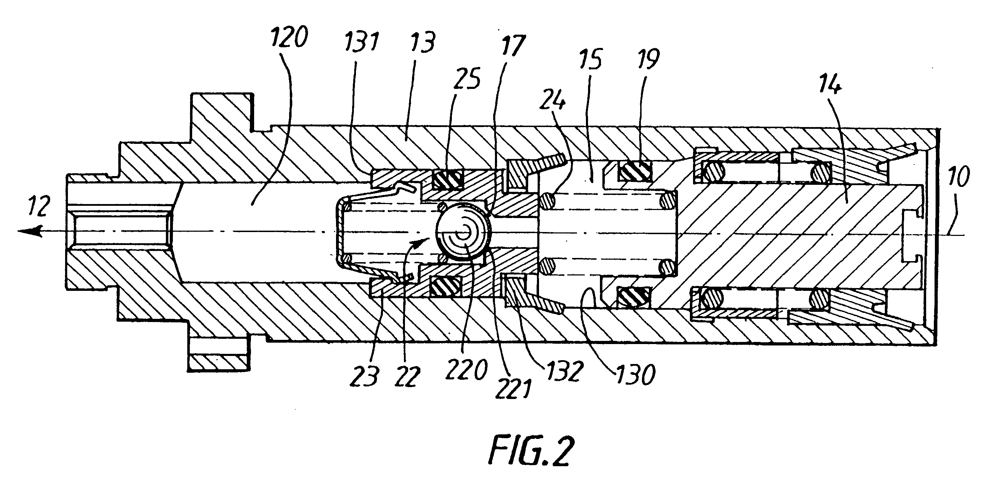

Le piston de réaction 14 est monté coulissant, suivant l'axe 10, dans l'alésage 130 et délimite dans cet alésage une chambre de réaction 15 qui communique avec la chambre de travail 12 à travers un clapet anti-retour 22, à travers au moins une restriction 17, et éventuellement, dans le mode de réalisation illustré à la figure 2, à travers un canal 120 formé par une partie antérieure de l'alésage 130.

Comme décrit dans le brevet EP - 0 662 894, le clapet anti-retour 22 et la restriction 17 sont destinés ensemble à opposer à une circulation de fluide depuis la chambre de travail 12 vers la chambre de réaction 15, et à une circulation en sens inverse, des première et seconde pertes de charge respectives dont la première est supérieure à la seconde.

En dehors du passage de fluide que permettent le clapet 22 et la ou les restrictions 17 entre la chambre de travail 12 du maître-cylindre 2 et la chambre de réaction 15, le piston principal 13 coulisse de façon étanche dans le maître-cylindre 2, l'étanchéité étant obtenue grâce au moins à un joint annulaire 18 (figure 1).

Le piston principal 13 est relié, à travers la bague 20, à la jupe rigide 4b de manière à recevoir une partie au moins de la force d'assistance exercée par l'intermédiaire de cette jupe.

Le piston de réaction 14 est quant à lui disposé axialement, en regard d'une tige de poussée 21 susceptible de lui transmettre au moins la force d'entrée exercée sur la tige de commande 8.

Comme le montre la figure 2, le clapet anti-retour 22 et la restriction 17 sont mobiles par rapport au piston principal 13, et sont par exemple portés par un troisième piston 23 monté coulissant dans l'alésage 130, entre deux butées axiales 131, 132 de cet alésage 130, le coulissement de ce piston 23 étant rendu étanche grâce à un joint annulaire 25.

Dans ce cas, un ressort 24 contraint en compression est de préférence disposé dans la chambre de réaction 15, entre le piston de réaction et le troisième piston 23, pour solliciter le piston 23 en direction de la chambre de travail 12.

Lorsque le clapet anti-retour 22 comprend, de façon classique, un organe d'obturation 220, tel qu'une bille, élastiquement sollicité contre un siège 221, la restriction 17 peut être tout simplement constituée par une fuite entre l'organe d'obturation 220 et le siège 221.

Lorsque la viscosité du fluide de freinage est trop élevée pour permettre à ce fluide présent dans la chambre de travail 12 et dans le canal 120 de s'infiltrer dans la chambre de réaction 15 à la vitesse souhaitée à travers la restriction 17, ce fluide rapproche le piston 23 du piston de réaction 14, l'invention permettant ainsi de pallier le défaut d'apparition de la force de réaction sur le piston de réaction 14.

## Revendications

1. Maître-cylindre à réaction hydraulique, comprenant une chambre de travail (12) qui est remplie d'un fluide de freinage et dans laquelle coulisse, suivant un premier axe (10), un piston principal (13) percé d'un alésage axial (130) fermé par un piston de réaction (14), le piston de réaction (14) étant également mobile suivant le premier axe (10) et délimitant dans l'alésage (130) une chambre de réaction (15) qui communique avec la chambre de travail (12) à travers un clapet anti-retour (22) et à travers au moins une restriction (17) destinés ensemble à opposer à une circulation de fluide depuis la chambre de travail (12) vers la chambre de réaction (15), et à une circulation en sens inverse, des première et seconde pertes de charge respectives dont la première est supérieure à la seconde, **caractérisé en ce que** le clapet anti-retour (22) et la restriction (17) sont montés mobiles par rapport au piston principal (13).

2. Maître-cylindre suivant la revendication 1, **caractérisé en ce que** le clapet anti-retour et la restriction sont portés par un troisième piston (23) coulissant de façon étanche dans l'alésage (130) entre deux butées (131, 132) de cet alésage.

3. Maître-cylindre suivant la revendication 2, **caractérisé en ce qu'**un ressort (24) contraint en compression est disposé dans la chambre de réaction (15) entre le piston de réaction et le troisième piston (23).

4. Maître-cylindre suivant l'une quelconque des revendications précédentes, **caractérisé en ce que** le clapet anti-retour (22) comprend un organe d'obturation (220) élastiquement sollicité contre un siège (221), et **en ce que** la restriction (17) est constituée par une fuite entre l'organe d'obturation (220) et le siège (221).

## Patentansprüche

1. Hauptzylinder mit hydraulischer Reaktion, mit einer Arbeitskammer (12), die mit einem Bremsfluid gefüllt ist und in der entlang einer ersten Achse (10) ein Hauptkolben (13) gleitet, der von einer axialen Bohrung (130) durchbrochen ist, die von einem Reaktionskolben (14) verschlossen ist, wobei der Reaktionskolben (14) ebenfalls entlang der ersten Achse (10) beweglich ist und in der Bohrung (130) eine Reaktionskammer (15) abgrenzt, die mit der Arbeitskammer (12) über ein Rückschlagventil (22) und über wenigstens eine Drossel (17) in Verbindung steht, die zusammen dafür vorgesehen sind, einem Fließen von Fluid von der Arbeitskammer (12) zur Reaktionskammer (15) sowie einem Fließen in der entgegengesetzten Richtung mit einem ersten bzw. einem zweiten Druckverlust entgegenzuwirken, wobei der erste Druckverlust größer ist als der zweite, **dadurch gekennzeichnet, daß** das Rückschlagventil (22) und die Drossel (17) relativ zum Hauptkolben (13) bewegbar angebracht sind.

2. Hauptzylinder nach Anspruch 1, **dadurch gekennzeichnet, daß** das Rückschlagventil und die Drossel von einem dritten Kolben (23) getragen sind, der in dichter Weise in der Bohrung (130) zwischen zwei Anschlägen (131, 132) dieser Bohrung verschiebbar ist.

3. Hauptzylinder nach Anspruch 2, **dadurch gekennzeichnet, daß** eine vorgespannte Druckfeder in der Reaktionskammer (15) zwischen dem Reaktionskolben und dem dritten Kolben (23) angeordnet ist.

4. Hauptzylinder nach einem der vorhergehenden Ansprüche, **dadurch gekennzeichnet, daß** das Rückschlagventil (22) ein Verschlußorgan (220) aufweist, das elastisch gegen einen Sitz (221) beaufschlagt ist, und daß die Drossel (17) durch einen Spalt zwischen dem Verschlußorgan (220) und dem Sitz (221) gebildet ist.

## Claims

1. Master cylinder with hydraulic reaction, comprising a working chamber (12) which is filled with a brake fluid and in which there slides, along a first axis (10), a main piston (13) pierced with an axial bore (130) closed by a reaction piston (14), the reaction piston (14) also being able to move along the first axis (10) and delimiting within the bore (130) a reaction chamber (15) which communicates with the working chamber (12) via a non-return valve (22) and via at least one restriction (17) which together are intended to impose upon a flow of fluid from the working chamber (12) towards the reaction chamber (15) and upon a flow in the opposite direction, first and second respective pressure drops, the first of which is higher than the second, **characterized in that** the non-return valve (22) and the restriction (17) are mounted so that they can move with respect to the main piston (13).

2. Master cylinder according to Claim 1, **characterized in that** the non-return valve and the restriction are borne by a third piston (23) sliding in leaktight fashion in the bore (130) between two stops (131, 132) of this bore.

3. Master cylinder according to Claim 2, **characterized in that** a spring (24) loaded in compression is placed in the reaction chamber (15) between the reaction piston and the third piston (23).

4. Master cylinder according to any one of the preceding claims, **characterized in that** the non-return valve (22) comprises a shut-off member (220) elastically urged against a seat (221), and **in that** the restriction (17) consists of a leakage between the shut-off member (220) and the seat (221).
